# EUROPÄISCHE PATENTSCHRIFT

(11) **EP 3 907 192 B1**
(45) Veröffentlichungstag und Bekanntmachung des Hinweises auf die Patenterteilung: **27.07.2022**
(21) Anmeldenummer: 21170967.0
(22) Anmeldetag: 28.04.2021
(51) Int. Cl.: C02F 1/42, B01J 49/00, C02F 1/28, C02F 1/44

(54) **VERFAHREN ZUR KONSERVIERUNG EINER WASSERBEHANDLUNGSANLAGE, MIT OBERFLÄCHENBENETZUNG EINER WASSERBEHANDLUNGSSTRUKTUR**
METHOD FOR PRESERVING A WATER TREATMENT PLANT WITH SURFACE WETTING OF A WATER TREATMENT STRUCTURE
PROCÉDÉ DE CONSERVATION D'UNE INSTALLATION DE TRAITEMENT DE L'EAU, À MOUILLAGE SURFACIQUE D'UNE STRUCTURE DE TRAITEMENT DE L'EAU

(30) Priorität: 07.05.2020 DE 102020112428
(43) Veröffentlichungstag der Anmeldung: 10.11.2021
(73) Patentinhaber: Judo Wasseraufbereitung GmbH, 71364 Winnenden (DE)
(72) Erfinder: Neidhart, Klaus, 71577 Großerlach (DE)
(74) Vertreter: Kohler Schmid Möbus Patentanwälte

(56) Entgegenhaltungen:
- US-A1- 2019 176 143
- Purolite: "The Storage, Transportation and Preconditioning of Ion Exchange Resins Storage Transportation & Preconditioning", Purolite Product Bulletin, 9. Dezember 2012 (2012-12-09), XP055826566, Gefunden im Internet: URL:https://www.yumpu.com/en/document/view /6227193/the-storage-transportation-precon ditioning-of-ion-purolitecom [gefunden am 2021-07-21]

## Beschreibung

Die Erfindung betrifft ein Verfahren zur Konservierung einer Wasserbehandlungsanlage mit einer Salzsole,
wobei die Wasserbehandlungsanlage einen Behälter umfasst, in welchem wenigstens eine Wasserbehandlungsstruktur angeordnet ist,
und wobei die Wasserbehandlungsanlage für eine Konservierzeit t1 von wenigstens 8 Stunden in einem Konservierzustand verbleibt,
insbesondere wobei der Konservierzustand dadurch beendet wird, dass der Behälter vor einer Inbetriebnahme der Wasserbehandlungsanlage mit Wasser gespült wird.

Ein solches Verfahren ist bekannt geworden aus der DE 10 2015 219 619 A1.

Wasserbehandlungsanlagen werden in vielfältiger Weise zur Aufbereitung von Wasser, insbesondere Trinkwasser, eingesetzt. Wasserbehandlungsanlagen können insbesondere unerwünschte Stoffe aus dem Wasser entfernen, etwa durch mechanisches Filtern, Adsorptionsprozesse an Oberflächen, Diffusion durch Membranen oder durch Ionentauschprozesse an einem Ionentauscherharz, oder auch erwünschte Stoffe dem Wasser hinzufügen, etwa Härtestabilisatoren. Eine Wasserbehandlungsanlage verfügt zu diesem Zweck über wenigstens eine Wasserbehandlungsstruktur, etwa einen Filter, einen Adsorber, eine Membran, einen Ionentauscher oder ein Dosiergerät.

Vor allem Wasserbehandlungsstrukturen mit großer Oberfläche laufen Gefahr, in längeren Anwendungspausen zu verkeimen. Eine Verkeimung kann für den Verwender des behandelten Wassers gesundheitlich gefährlich werden, insbesondere wenn das Wasser getrunken wird oder Wassernebel eingeatmet werden können, etwa beim Duschen.

Da bei Trinkwasser generell keine vollständige Keimfreiheit garantiert werden kann, müssen Wasserbehandlungsanlagen derart betrieben werden, dass eine Aufkeimung in der Anlage vermieden wird.

Beispielsweise wird bei DIN/DVGW (DIN: Deutsches Institut für Normung e.V.; DVGW: Deutscher Verein des Gas- und Wasserfaches e. V.) geprüften Enthärtungsanlagen das Ionenaustauscherharz bei jeder Regeneration desinfiziert. Außerdem wird spätestens nach 4 Tagen automatisch eine Regeneration ausgelöst. Bei längeren Stillstandzeiten, insbesondere wenn die Wasserbehandlungsanlage nicht in eine Hausinstallation eingebaut ist und gelagert wird, kann für die Konservierung eine Salzsole verwendet werden.

Die DE 10 2015 219 619 A1 beschreibt die Verwendung einer Salzsole zur Konservierung eines Ionenaustauscherharzes in einer Wasserenthärtungsanlage. Die Salzsole verbleibt mindestens 8 Stunden in einem Harzbehälter mit Ionenaustauscherharz und wird dann vollständig ausgespült. Der Harzbehälter wird insbesondere direkt nach der Herstellung mit der Salzsole befüllt und die Salzsole erst unmittelbar vor einer erstmaligen Inbetriebnahme des Harzbehälters ausgespült. Die DE 28 26 702 A1 offenbart eine Vorrichtung zum Enthärten von Wasser, bei der zwei Enthärtersäulen im Wechsel betrieben werden, und in einer auf ihren Betrieb wartenden Enthärtersäule eine Salzlösung vorgehalten wird. Die Salzlösung verhindert eine Verkeimung während der Wartezeit und wird erst unmittelbar vor der Inbetriebnahme der Enthärtersäule ausgespült.

Peter Meyers, "Protect the resin", Water Tech Online, Oct 13th, 2010 und DuPont: "DuPont Ion Exchange resins, Proper Storage Conditions for DuPont Ion Exchange Resins", Form No. 177-01750, Rev. 2, October 2019, empfehlen, Ionenaustauscherharz außerhalb von Betriebsphasen in Salzsole zu lagern. Die Salzsole soll vor Inbetriebnahme wieder ausgespült werden.

Insbesondere nach dem Zusammenbau einer Wasserbehandlungsanlage kann eine erhebliche Zeit (insbesondere Lagerungszeit) vergehen, bis diese in eine Hausinstallation eingebaut und in Betrieb genommen wird. Für eine Konservierung der in der Wasserbehandlungsanlage enthaltenen Wasserbehandlungsstruktur, etwa einem Ionentauscherharz, in Salzsole wird oft über lange Zeit eine große Menge an Salzsole benötigt, was erhebliche Kosten verursacht und die Umwelt belastet. Zudem besteht eine gewisse Gefahr, dass der Behälter, in welchem die Wasserbehandlungsstruktur und die Salzsole angeordnet sind, insbesondere während eines Transports (etwa von der Produktionsstätte zu einem Lagerraum oder von einem Lagerraum zum Ort einer Hausinstallation) auslaufen und Schäden verursachen kann. Zudem ist die Wasserbehandlungsanlage bei mit Salzsole befülltem Behälter recht schwer, was ebenfalls die Handhabung erschwert und den Transport verteuert.

US2019/176143 A1 offenbart ein Verfahren zur Konservierung einer Wasserbehandlungsanlage mit einem Fluid. Das Fluid ist jedoch keine Sole.

### Aufgabe der Erfindung

Es ist Aufgabe der Erfindung, ein Verfahren zur Konservierung von Wasserbehandlungsanlagen vorzustellen, das kostengünstig ist und die Handhabung der Wasserbehandlungsanlage vereinfacht.

### Beschreibung der Erfindung

Diese Aufgabe wird erfindungsgemäß auf überraschend einfache und wirkungsvolle Weise gelöst durch ein Verfahren der eingangs genannten Art, das dadurch gekennzeichnet ist,
dass im Konservierzustand eine Oberfläche der wenigstens einen Wasserbehandlungsstruktur im Behälter mit der Salzsole benetzt gehalten wird, und eine Umgebung der wenigstens einen Wasserbehandlungsstruktur im Behälter mit einem Gas befüllt gehalten wird.

Die Erfindung sieht vor, im Konservierzustand während der Konservierzeit die wenigstens eine Wasserbehandlungsstruktur nicht in Salzsole zu lagern, sondern lediglich die Oberfläche der Wasserbehandlungsstruktur mit Salzsole benetzt zu halten, und im Übrigen den Behälter, in welchem die Wasserbehandlungsstruktur enthalten ist, im Wesentlichen mit einem Gas befüllt zu halten. Dadurch wird die Wasserbehandlungsanlage leichter, und es können keine größeren Mengen Salzsole mehr auslaufen. Entsprechend ist die Handhabung der Wasserbehandlungsanlage bei der Montage, der Lagerung und beim Transport deutlich vereinfacht, und insbesondere der Transport billiger. Zudem wird über die Konservierzeit nur eine minimale Menge an Salzsole benötigt, was kostengünstig und umweltfreundlich ist. Dadurch, dass am Ende der Konservierzeit keine oder allenfalls sehr wenig Salzsole aus dem Behälter entfernt (insbesondere abgelassen oder abgepumpt) werden muss, können Spülprozesse reduziert werden, und die Inbetriebnahme der Wasserbehandlungsanlage kann besonders schnell erfolgen.

Dadurch, dass die (gesamte) Oberfläche der wenigstens einen Wasserbehandlungsstruktur während der Konservierzeit t1 mit der Salzsole benetzt gehalten wird, wird bereits ein ausreichender Schutz vor Verkeimung während der gesamten Konservierzeit t1 erreicht. Es ist insbesondere nicht notwendig, den Behälter während der Konservierzeit t1 mit Salzsole gefüllt zu lassen. Stattdessen kann der Behälter bzw. die Umgebung der Wasserbehandlungsstruktur im Behälter mit Gas (etwa Luft) gefüllt sein. Dies erleichtert den Transport und die Lagerung der Wasserbehandlungsanlage im Konservierzustand. Die Wasserbehandlungsanlage hat ein vergleichsweise geringes Gewicht, und die Gefahr von Schäden durch auslaufende Salzsole ist minimiert. Um den Konservierzustand aufrecht zu erhalten, wird nur wenig Salzsole benötigt, was kostengünstig ist und die Umwelt schont. Insbesondere kann, wenn die Benetzung der Wasserbehandlungsstrukturen durch ein initiales Befüllen des Behälters mit Salzsole und anschließendes Entfernen der Salzsole aus dem Behälter erfolgt, dieselbe Salzsole für eine Vielzahl von Wasserbehandlungsanlagen verwendet werden, da nur ein minimaler Teil der Salzsole als Oberflächenbenetzung in einer jeweiligen Wasserbehandlungsanlage zurückbleiben muss.

Typischerweise gilt für die Konservierzeit t1, dass t1 ≥ 1 Tag und/oder t1 ≤ 3 Monate, bevorzugt t1 ≥ 1 Woche und/oder t1 ≤ 1 Monat, ist. Die erfindungsgemäße Konservierung wird typischerweise zwischen dem Zusammenbau der Wasserbehandlungsanlage in einer Produktionsstätte und der Inbetriebnahme der Wasserbehandlungsanlage in einer Hausinstallation, oder zwischen einer Demontage der Wasserbehandlungsanlage an der Hausinstallation und einer Reparatur in einer Werkstatt und/oder zwischen einer Reparatur der Wasserbehandlungsanlage in einer Werkstatt und einer Wiederinbetriebnahme der Wasserbehandlungsanlage in einer Hausinstallation, eingesetzt.

Typische Wasserbehandlungsstrukturen für die Erfindung sind Filter (insbesondere mechanische Filter, Siebfilter), Adsorber (insbesondere Aktivkohle-Adsorber), Membranen (insbesondere halbdurchlässige Membranen für eine Entsalzung), Ionentauscher (insbesondere Ionentauscher/Ionentauscherharze für die Wasserenthärtung), Dosiergeräte (insbesondere zur Zusdosierung von Härtestabilisatoren) und Elektroden von physikalischen und/oder elektrochemischen Wasserbehandlungseinrichtungen.

Typischerweise wird im Rahmen der Erfindung Trinkwasser behandelt. Das im Behälter enthaltene Gas kann gefiltert sein, um unerwünschte Keine und Partikel zu minimieren. Das im Behälter enthaltene Gas kann insbesondere Luft oder ein inertes Schutzgas sein.

Typischerweise ist im Konservierzustand die Umgebung der wenigstens einen Wasserbehandlungsstruktur im Behälter (also das innere Volumen des Behälters, soweit es nicht von der wenigstens einen Wasserbehandlungsstruktur selbst eingenommen wird) zu wenigstens 90%, bevorzugt wenigstens 95%, besonders bevorzugt wenigstens 99%, mit dem Gas befüllt. Umgekehrt ist es oft bevorzugt, wenn noch eine kleine Menge an flüssiger Salzsole im Behälter im Konservierzustand vorgehalten wird, beispielsweise entsprechend einer Befüllung mit Salzsole der Umgebung der wenigstens einen Wasserbehandlungsstruktur im Behälter von wenigstens 0,1%, bevorzugt wenigstens 0,2%, um die Gefahr eines Austrocknens der Wasserbehandlungsstruktur zu minimieren; in letzterem Fall sollte der Behälter im Konservierzustand (zumindest) flüssigkeitsdicht verschlossen werden.

Die Salzsole weist typischerweise eine Konzentration von wenigstens 10%, bevorzugt wenigstens 30%, besonders bevorzugt wenigstens 50%, ganz besonders bevorzugt wenigstens 60%, der Sättigungskonzentration von NaCl in Wasser bei Raumtemperatur (20°C) auf.

Für die Durchführung des Verfahrens zur Konservierung, etwa für ein Befüllen des Behälters mit Salzsole oder das Entfernen von Salzsole aus dem Behälter, oder für die Zuführung eines Salzsole-Gas-Gemisches, können zum Teil oder vollständig Anschlüsse der Wasserbehandlungsanlage verwendet werden, die auch in einem Betriebs- oder Regenerationsmodus der Wasserbehandlungsanlage eine Funktion aufweisen.

### Bevorzugte Varianten des erfindungsgemäßen Verfahrens

Bei einer bevorzugten Variante des erfindungsgemäßen Verfahrens ist das Gas als Luft gewählt. Die Befüllung mit Luft ist besonders kostengünstig, und bezüglich des Keimschutzes in den meisten Anwendungsfällen unbedenklich, insbesondere wenn eine Salzsole mit einer Konzentration von wenigstens 30% der Sättigungskonzentration gewählt wird.

Eine andere, vorteilhafte Variante sieht vor, dass das Gas als ein Inertgas, insbesondere Stickstoff oder Argon, gewählt ist. Durch Lagerung der Wasserbehandlungsanlage in einer Inertgas-Atmosphäre wird die Vermehrung von aeroben Keimen erschwert. Stickstoff als Inertgas ist besonders kostengünstig; andere Inertgase sind insbesondere Edelgase, wobei Argon besonders kostengünstig ist. Nach dem Ausblasen bzw. der Befüllung des Behälters mit dem Inertgas wird die Wasserbehandlungsanlage üblicherweise gasdicht verschlossen, so dass das Inertgas nicht entweichen kann.

Besonders bevorzugt ist eine Variante, bei der der Behälter im Konservierzustand gasdicht verschlossen gehalten wird. Dadurch wird ein Austrocknen der wenigstens einen Wasserbehandlungsstruktur während der Konservierzeit zuverlässig verhindert, insbesondere auch bei längeren Konservierzeiten t1, z.B. t1≥3 Tage, und/oder wenn im Einsatzgebiet die Luftfeuchtigkeit niedrig ist, und/oder wenn im Einsatzgebiet die Temperaturen hoch sind. Bei geringen Konservierzeiten t1 (etwa t1 < 3 Tage) und sonst günstigen Bedingungen (hohe Luftfeuchtigkeit, niedrige Temperaturen im Einsatzgebiet) kann manchmal auf ein gasdichtes Verschließen des Behälters verzichtet werden. In einer anderen Variante kann auch vorgesehen sein, den Behälter im Konservierzustand flüssigkeitsdicht verschlossen zu halten.

Bevorzugt ist eine Variante, bei der die wenigstens eine Wasserbehandlungsstruktur eine Ionentauscher-Struktur umfasst, insbesondere umfassend eine Schüttung von Ionentauscherharz-Körnern. Ionentauscher-Strukturen weisen vergleichsweise große Oberflächen auf, die im Allgemeinen eine Verkeimung begünstigen; andererseits benötigen diese auch große Behälter, so dass sich die Ersparnis an Salzsole beim Konservieren durch das erfindungsgemäße Verfahren hier besonders bemerkbar macht, und insbesondere besonders große Kostenvorteile durch die Erfindung entstehen.

Vorteilhaft ist auch eine Variante, bei der die wenigstens eine Wasserbehandlungsstruktur einen Filter, insbesondere einen Siebfilter oder einen Aktivkohlefilter, und/oder eine semipermeable Membran umfasst. Diese Wasserbehandlungsstrukturen weisen oft sehr kleine Öffnungen, Ausnehmungen, Drahtstücke, Kanten und dergleichen auf, an denen sich Keime leicht festsetzen können, und können durch das erfindungsgemäße Verfahren kostengünstig und einfach konserviert werden.

### Variante mit Benetzung der Oberfläche durch zeitweilige Befüllung des Behälters mit Salzsole

Besonders bevorzugt ist eine Variante, die vorsieht, dass das Verfahren vor Beginn der Konservierzeit t1 folgende Schritte umfasst:
a) Befüllen des Behälters, in welchem die wenigstens eine Wasserbehandlungsstruktur angeordnet ist, mit der Salzsole;
b) Einwirken der Salzsole auf die Wasserbehandlungsstruktur während einer Einwirkzeit t2, wobei t2<t1;
c) Entfernen der Salzsole aus dem Behälter und Befüllen des Behälters mit dem Gas.

Bei diesem Vorgehen kann die gesamte Oberfläche der Wasserbehandlungsstruktur sehr zuverlässig benetzt werden, und der größte Teil der Salzsole kann für weitere Konservierungen wiederverwendet werden.

Typischerweise gilt 1 Sekunde ≤ t2 ≤ 1 Tag, bevorzugt 10 Sekunden ≤ t2≤ 3 Stunden, besonders bevorzugt 1 Minute ≤ t2 ≤ 1 Stunde. Es hat sich gezeigt, dass eine Verweilzeit der kompletten Salzsole im Behälter von 1 Minute bis 1 Stunde für eine wirkungsvolle Konservierung ausreichend ist, wenn die Salzsole anschließend lediglich entfernt wird ohne eine (sofortige) Nachspülung, so dass die Oberfläche der Wasserbehandlungsstruktur mit Salzsole benetzt bleibt. Typische Zeiten von der Montage bis zum Einsatz einer Wasserbehandlungsanlage liegen zwischen wenigen Tagen und 3 Monaten, oft zwischen 1 Woche und 1 Monat. Oftmals gilt auch t2≤0,2∗t1 oder auch t2≤0,02∗t1.

In Schritt c) kann insbesondere ein Ausblasen, ein Ablassen (Ablaufen) oder ein Absaugen (beispielsweise mit einer Pumpe) der Salzsole erfolgen. Zum Befüllen mit Gas kann im einfachsten Fall ein Einlass (etwa ein Einlassventil oder oberer Anschluss) für Umgebungsluft geöffnet werden. Typischerweise wird Schritt c) beendet, wenn Salzsole aus dem Behälter der Wasserbehandlungsanlage nur noch tropfenweise austritt; durch die Restmenge an flüssiger Salzsole wird zuverlässig verhindert, dass Salzsole auf der Wasserbehandlungsstruktur im Behälter eintrocknet. In der Regel wird nach Schritt c) der Behälter in einem Schritt d) verschlossen, bevorzugt gasdicht verschlossen.

Bei einer bevorzugten Weiterentwicklung dieser Variante wird in Schritt c) der

Behälter mit Druckgas, insbesondere Druckluft, ausgeblasen. Dieses Vorgehen ist einfach und schnell. Druckluft ist in der Regel in Produktionsstätten leicht verfügbar. Das Druckgas kann gefiltert sein, um eine Einbringung unerwünschter Keime oder Partikel zu minimieren.

Bei einer anderen, vorteilhaften Weiterbildung wird in Schritt c) die Salzsole über einen Anschluss entfernt, der unterhalb des Behälters an der Wasserbehandlungsanlage angeordnet ist. Mit dem Anschluss unterhalb des Behälters ("unterer Anschluss") ist insbesondere beim Ablassen der Salzsole sichergestellt, dass nach Schritt c) keine Salzsole mehr (oder allenfalls sehr wenig Salzsole) im Behälter steht, sondern im Wesentlichen lediglich Oberflächen mit dieser benetzt sind.

### Variante mit Anwendung eines Salzsole-Gas-Gemischs zur Benetzung der Oberfläche

Eine weitere bevorzugte Variante des erfindungsgemäßen Verfahrens sieht vor, dass das Verfahren vor Beginn der Konservierzeit t1 folgenden Schritt umfasst: a') die wenigstens eine Wasserbehandlungsstruktur wird einem Salzsole-Gas-Gemisch ausgesetzt, insbesondere mit einem Salzsole-Gas-Gemisch besprüht, so dass die Oberfläche der Wasserbehandlungsstruktur mit der Salzsole benetzt wird. Auf diese Art und Weise ist eine besonders einfache und schnelle Benetzung der Wasserbehandlungsstruktur mit Salzsole möglich. Der Benetzungsvorgang kann im Behälter der Wasserbehandlungsanlage erfolgen, insbesondere bei im Wesentlichen zweidimensionalen Wasserbehandlungsstrukturen wie Siebfiltern und Membranen; ggf. kann ein Einsprühen von mehreren Seiten in den Behälter, insbesondere von zwei einander gegenüberliegenden Seiten, erfolgen. Ebenso kann der Benetzungsvorgang vor der Einfüllung (Einsetzen) der Wasserbehandlungsstruktur in den Behälter noch außerhalb der Wasserbehandlungsanlage durchgeführt werden; hierbei erfolgt oft eine Relativbewegung von Sprühkopf und Wasserbehandlungsstruktur. Das Gas im Salzsole-Gas-Gemisch kann insbesondere Luft sein.

Vorteilhaft ist eine Weiterentwicklung dieser Variante, die vorsieht,
dass Schritt a') erfolgt, bevor die wenigstens eine Wasserbehandlungsstruktur in den Behälter eingesetzt ist,
und dass das Verfahren vor Beginn der Konservierzeit t1 weiterhin folgenden Schritt umfasst:
   b') die an ihrer Oberfläche mit Salzsole benetzte, wenigstens eine Wasserbehandlungsstruktur wird in den Behälter eingesetzt.

Dadurch, dass die Wasserbehandlungsstruktur dem Gas-Salzsole-Gemisch ausgesetzt wird, bevor diese in den Behälter eingebaut wird, ist die Wasserbehandlungsstruktur besonders leicht zugänglich, insbesondere von beliebigen Seiten, etwa für einen Sprühkopf. Typischerweise erfolgt nach Schritt b') in einem weiteren Schritt c') ein Verschließen des Behälters, typischerweise ein gasdichtes Verschließen des Behälters.

### Weitere Varianten

Bevorzugt ist eine Variante, bei der die Konservierzeit t1 während oder nach dem Zusammenbau der Wasserbehandlungsanlage an einem Zusammenbauort, aber vor einem Transport der Wasserbehandlungsanlage vom Zusammenbauort zu einem Anwendungsort, insbesondere dem Ort einer Hausinstallation, beginnt. Meist mit Abschluss des Zusammenbaus (auch genannt Montage) am Zusammenbauort (Produktionsort) wird der Konservierzustand eingenommen. Sodann wird die Wasserbehandlungsanlage typischerweise an einen Lagerort transportiert und dort gelagert; bei "just in time"-Konzepten kann die Lagerung auch entfallen oder minimiert sein. Schließlich erfolgt der Transport zu einem Anwendungsort (Einsatzort), wo ggf. nochmals eine Lagerung erfolgen kann, und der Einbau in eine Hausinstallation. Während der Lager-, Transport- und Einbauphase ist die Wasserbehandlungsanlage leicht und handlich und trotzdem vor einer Verkeimung geschützt. Salzsole kann nicht oder nur in minimalen Mengen auslaufen, da die Wasserbehandlungsstruktur lediglich mit einem dünnen Film an Salzsole benetzt ist.

Ebenfalls bevorzugt ist eine Variante, bei der die Konservierzeit t1 vor dem Ausbau der Wasserbehandlungsanlage an einem Anwendungsort, insbesondere dem Ort einer Hausinstallation, beginnt. Ein Ausbau einer Wasserbehandlungsanlage aus einer Hausinstallation kann beispielsweise für eine Reparatur oder eine Wartung notwendig werden. Die Wasserbehandlungsanlage ist beim Transport (etwa zu und von einer Werkstatt) und während der Wartung oder Reparatur vor einer Verkeimung geschützt und bleibt leicht handhabbar.

Vorteilhaft ist auch eine Variante, bei der der Salzsole ein Desinfektionsmittel zugegeben wird oder ein Desinfektionsmittel elektrolytisch in der Salzsole erzeugt wird. Das Desinfektionsmittel tötet Keime schnell ab, während die Konservierung mit der Salzsole eine Aufkeimung verhindert. Insbesondere kann durch die Salzsole eine Aufkeimung verringert oder verhindert werden, auch nachdem das Desinfektionsmittel aufgebraucht ist, sich verflüchtigt hat, oder in sonstiger Weise unwirksam geworden ist.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: illustriert schematisch den Ablauf einer beispielhaften Variante eines erfindungsgemäßen Verfahrens zur Konservierung einer Wasserbehandlungsanlage, mit einem Grundfall und einem Unterfall;
- Fig. 2: zeigt ein Diagramm einer experimentell bestimmten Abhängigkeit der Keimzahl eines mit Keimen vorbelasteten Ionenaustauscherharzes von der Dauer der Lagerung bei Lagerung in Wasser ohne Anwendung einer Salzsole;
- Fig. 3: zeigt ein Diagramm einer experimentell bestimmten Abhängigkeit der Keimzahl eines mit Keimen vorbelasteten Ionenaustauscherharzes von der Dauer der Lagerung bei Lagerung in einer 60%igen Salzsole;
- Fig. 4: zeigt ein Diagramm der experimentell bestimmten Abhängigkeit der Keimzahl eines mit Keimen vorbelasteten Ionenaustauscherharzes von der Dauer der Lagerung bei 24-stündiger Vorbehandlung in einer 60%igen Salzsole und anschließendem Ausblasen des Salzsole, gemäß der Erfindung;
- Fig. 5: zeigt ein Diagramm der experimentell bestimmten Abhängigkeit der Keimzahl eines mit Keimen vorbelasteten Ionenaustauscherharzes von der Dauer der Lagerung bei 10-minütiger Vorbehandlung in einer 60%igen Salzsole und anschließendem Ausblasen des Salzsole, gemäß der Erfindung;
- Fig. 6: illustriert schematisch die Benetzung der Oberfläche eines Ionentauscherharzes gemäß der Erfindung, durch Befüllen des Behälters mit Salzsole und anschließendes Ablassen der Salzsole;
- Fig. 7: illustriert schematisch die Benetzung der Oberfläche eines Ionentauscherharzes gemäß der Erfindung, durch Besprühen des Ionentauscherharzes mit einem Salzsole-Gas-Gemisch und anschließendem Einbau in den Behälter;
- Fig. 8: illustriert schematisch die Benetzung der Oberfläche eines Siebfilters gemäß der Erfindung, durch Besprühen des Siebfilters mit einem Salzsole-Gas-Gemisch.

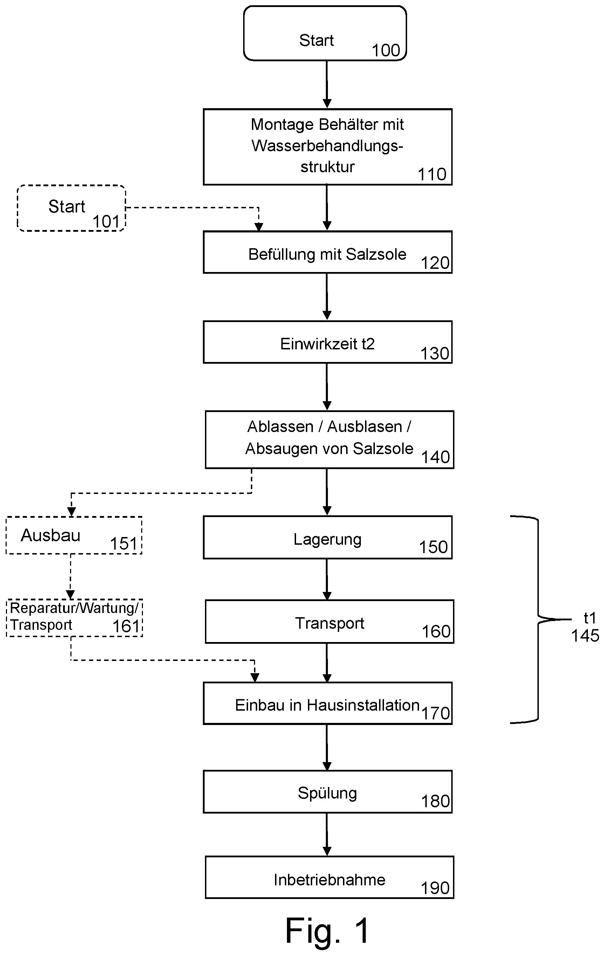

Die **Fig. 1** zeigt in einem schematischen Ablaufdiagramm eine beispielhafte Variante des erfindungsgemäßen Verfahrens zur Konservierung einer Wasserbehandlungsanlage. Es wird zunächst der Grundfall (siehe durchgezogene Kästen in Fig. 1) erläutert, bei dem eine Wasserbehandlungsanlage erstmals zusammengebaut und in eine Hausinstallation installiert wird.

Nach dem Start 100 des Verfahrens wird im Grundfall die Wasserbehandlungsanlage an einem Zusammenbauort zusammengebaut (montiert) 110, und dabei insbesondere eine Wasserbehandlungsstruktur (etwa ein Ionentauscher) in einem zugehörigen Behälter montiert.

Um die Wasserbehandlungsstruktur zu konservieren, und insbesondere vor Verkeimung schützen, erfolgt nun eine Befüllung des Behälters, in welchem auch die Wasserbehandlungsstruktur angeordnet ist, mit Salzsole 120; dieser Vorgang wird auch als Schritt a) bezeichnet. Sodann wirkt die Salzsole über eine Einwirkzeit t2 auf die Wasserbehandlungsstruktur im Behälter ein 130; dieser Vorgang wird auch als Schritt b) bezeichnet. Mit anderen Worten, die Salzsole wird eine Zeit lang im Behälter belassen, beispielsweise für 10 Minuten. Sodann wird die Salzsole aus dem Behälter entfernt 140, beispielsweise abgelassen, ausgeblasen oder abgesaugt; dieser Vorgang wird auch als Schritt c) bezeichnet. Dabei wird die Salzsole im Behälter durch ein einströmendes Gas, etwa Luft oder ein Schutzgas, ersetzt.

Die Wasserbehandlungsanlage ist nun im erfindungsgemäßen Konservierzustand 145. Durch die Schritte a), b) und c) bzw. 120, 130 und 140 wurde die Oberfläche der Wasserbehandlungsstruktur mit Salzsole benetzt. Nach dem Entfernen der Salzsole aus dem Behälter wird typischerweise der Behälter auch in einem Schritt d) gasdicht verschlossen, um eine Austrocknung zu verhindern, so dass diese Benetzung auch längerfristig erhalten bleibt.

Sodann wird hier die Wasserbehandlungsanlage für eine gewisse Zeit eingelagert 150. Die Lagerung erfolgt dabei typischerweise am Zusammenbauort (Zusammenbauort=Lagerort); der Lagerort kann aber auch vom Zusammenbauort verschieden sein (in diesem Fall erfolgt noch ein Zwischentransport). Sobald ein Einsatz der Wasserbehandlungsanlage ansteht, erfolgt ein Transport 160 der Wasserbehandlungsanlage vom Zusammenbauort (oder Lagerort) zu einem Anwendungsort, typischerweise zu einem Gebäude, in welchem die Wasserbehandlungsanlage in die Hausinstallation eingebaut werden soll. Anschließend wird die Wasserbehandlungsanlage in die Hausinstallation des Gebäudes eingebaut 170.

Über die Schritte 150, 160 und 170 bleibt der Konservierzustand 145 erhalten; die Konservierzeit t1, in der der Konservierzustand 145 erhalten bleibt, also die Oberfläche der Wasserbehandlungsstruktur mit Salzsole benetzt ist, aber der Behälter im Übrigen im Wesentlichen mit Gas befüllt ist (und nicht mit Salzsole), beträgt meist einige Wochen oder Monate, wobei die meiste Zeit davon typischerweise auf die Lagerung 150 entfällt.

Um die Wasserbehandlungsanlage nach ihrem Einbau auf die Inbetriebnahme vorzubereiten, wird diese nun gespült 180. Dabei werden Reste von Salzsole von der Wasserbehandlungsstruktur und aus dem Behälter entfernt. Danach kann die Inbetriebnahme der Wasserbehandlungsanlage 190 erfolgen. Im Falle eines Ionentauschers als Wasserbehandlungsstruktur wird die Wasserbehandlungsanlage nun für die Enthärtung von Wasser in dem Gebäude eingesetzt.

Die Fig. 1 illustriert zudem auch einen Unterfall betreffend die Reparatur oder Wartung einer bereits in eine Hausinstallation eingebauten Wasserbehandlungsanlage (siehe gestrichelte Kästen in Fig. 1, soweit nicht dieselben Schritte wie im Grundfall vorgesehen sind).

Im Unterfall erfolgt nach dem Start 101 des Verfahrens die Befüllung des Behälters der noch in der Hausinstallation installierten Wasserbehandlungsanlage mit Salzsole 120, das Abwarten der Einwirkzeit t2 130 und das Entfernen der Salzsole 140 aus dem Behälter. Die Wasserbehandlungsanlage ist sodann im Konservierzustand 145; während des Konservierzustands 145 wird der Behälter, in welchem die benetzte Wasserbehandlungsstruktur enthalten ist, typischerweise gasdicht verschlossen gehalten. Sodann wird die Wasserbehandlungsanlage aus der Hausinstallation ausgebaut (Demontage) 151. Anschließend erfolgt die Wartung oder Reparatur der Wasserbehandlungsanlage 161; soweit erforderlich wird dabei die Wasserbehandlungsanlage auch transportiert, etwa zu einer Werkstatt, oder zeitweilig gelagert. Anschließend wird die Wasserbehandlungsanlage wieder in die Hausinstallation eingebaut 170, und kann nach ihrer Spülung 180 wieder in Betrieb genommen werden 190.

Während der Schritte 151, 161 und 170 über die Konservierzeit t1 ist die Wasserbehandlungsanlage im Konservierzustand 145 und durch die Oberflächenbenetzung der Wasserbehandlungsstruktur vor Verkeimung gut geschützt, wofür nur eine geringe Menge an Salzsole benötigt wird, da der Behälter im Wesentlichen mit Gas befüllt ist. Die Konservierzeit t1 beträgt im Falle einer Wartung oder Reparatur meist einige Tage oder wenige Wochen, meist 3 Wochen oder weniger, oft 2 Wochen oder weniger.

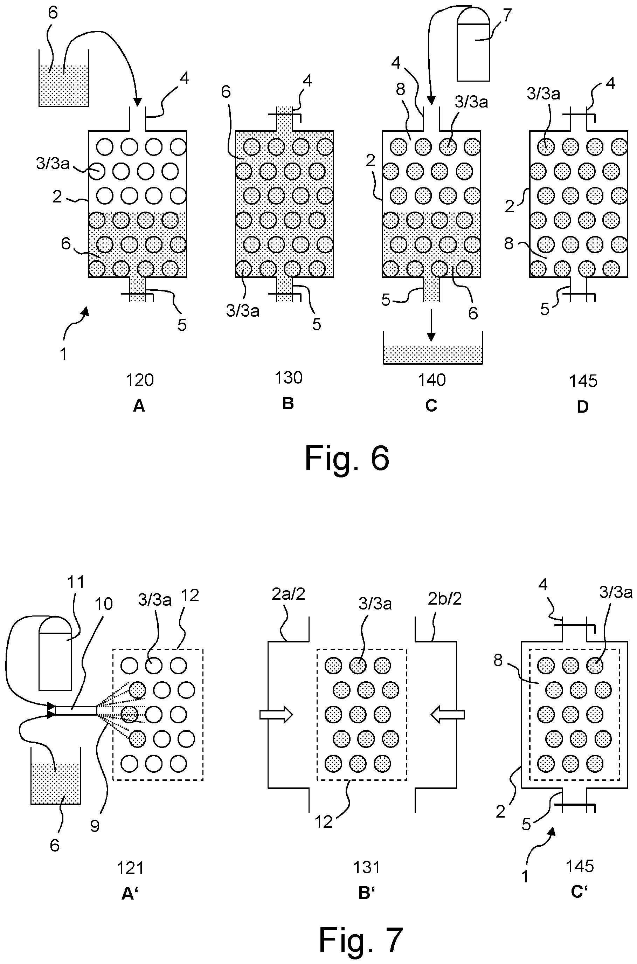

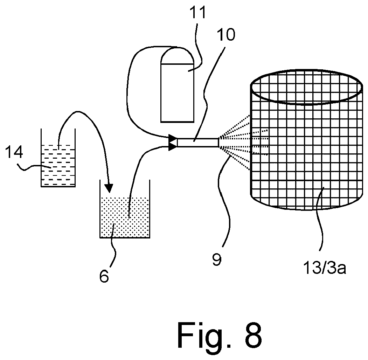

Man beachte, dass im Ablauf der Fig. 1 anstelle einer Befüllung des Behälters mit Salzsole 120, Abwarten der Einwirkzeit 130 und dem Entfernen der Salzsole aus dem Behälter 140 auch alternativ beispielsweise ein Besprühen der Wasserbehandlungsstruktur mit einem Salzsole-Gas-Gemisch erfolgen kann (nicht näher dargestellt in Fig. 1, vgl. dazu aber Fig. 7, Fig. 8).

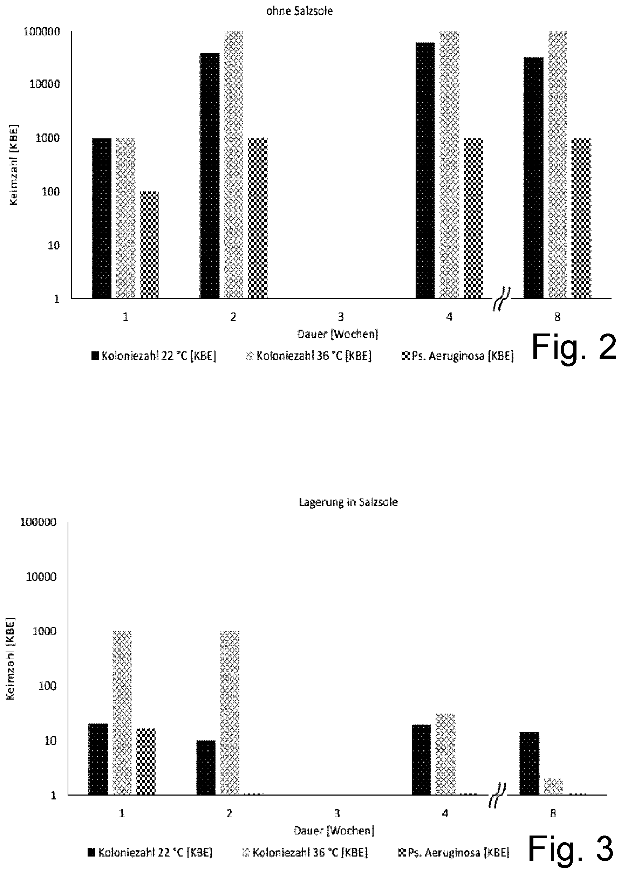

Die Figuren 2 bis 5 erläutern von den Erfindern bestimmte, beispielhafte zeitliche Entwicklungen von Keimzahlen auf einem Ionentauscherharz als Beispiel für eine Wasserbehandlungsstruktur, das auf unterschiedliche Weise konserviert und gelagert wurde, um die Funktion der Erfindung zu belegen. In allen Fällen wurde ein handelsüblicher Ionentauscher (Menge jeweils 60 g) eingesetzt, der unter jeweils gleichen Bedingungen mit Keimen vorbelastet war. Nach 1, 2, 4 und 8 Wochen wurden jeweils die (gesamten) Koloniezahlen bei 22°C und 36°C sowie die Koloniezahlen spezifisch für Pseudomonas aeruginosa (bei 20°C) bestimmt. Soweit eine Salzsole eingesetzt wurde, betrug deren Konzentration jeweils 60% der Sättigungskonzentration von NaCl (eingestellt bei 20°C).

In dem in **Fig. 2** illustrierten Fall wurden keine besonderen Maßnahmen zur Konservierung getroffen, und das mit Keimen vorbelastete Ionentauscherharz wurde in 200 ml Wasser gelagert; insbesondere erfolgte keine Anwendung von Salzsole oder einem Desinfektionsmittel, und das Ionentauscherharz verblieb über die gesamte Lagerzeit im Wasser. Die Keimzahlen steigen innerhalb von 2 Wochen auf ein Maximum und stabilisieren sich in der Folgezeit auf diesem sehr hohen Niveau (KBE bei ca. 100 000).

In dem in **Fig. 3** illustrierten Fall wurde das mit Keimen vorbelastete Ionentauscherharz in 200 ml Salzsole gelagert; das Ionentauscherharz verblieb über die gesamte beobachtete Lagerungszeit in der Salzsole. Die Koloniezahl bei 36°C liegt in den ersten beiden Wochen auf einem mittleren Niveau (KBE um 1000), und bei 22°C bei einem niedrigen Niveau (KBE um 10-40). In der Folgezeit zeigen sämtliche Werte eine niedrige Keimbelastung (KBE um 10-40 oder niedriger).

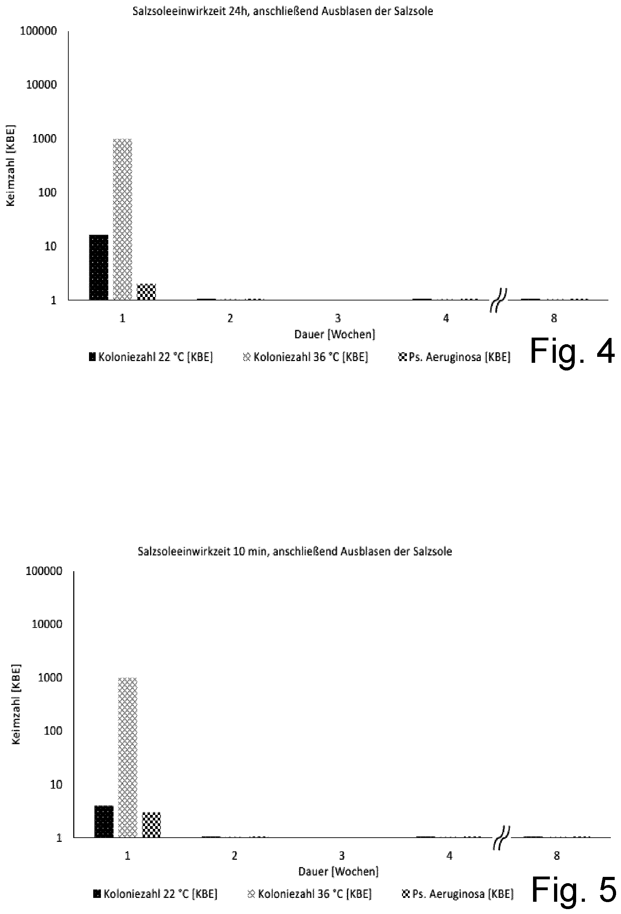

In dem in **Fig. 4** illustrierten Fall wurde, gemäß der Erfindung, das mit Keimen vorbelastete Ionentauscherharz für eine Einwirkzeit t2 von 24 Stunden in Salzsole aufbewahrt, und sodann die Salzsole aus dem Behälter des Ionentauscherharzes ausgeblasen und der Behälter verschlossen. Die Oberfläche des Ionenaustauscherharzes blieb somit mit Salzsole bedeckt und konnte während der weiteren Lagerung nicht eintrocknen. Die festgestellten Keimzahlen sind nach einer Woche vergleichbar mit den Keimzahlen des Falls von Fig. 3; ab einer Lagerzeit von 2 Wochen waren praktisch keine Kolonien mehr nachweisbar.

Im Fall der **Fig. 5** wurde wie im Fall von Fig. 4 vorgegangen, gemäß der Erfindung, wobei jedoch die Einwirkzeit t2 der Salzsole auf 10 Minuten reduziert wurde. Die Entwicklung der Keimzahl ist ähnlich dem Fall von Fig. 4, wobei auch hier nach 2 Wochen die Proben praktisch keimfrei waren.

Zusammenfassend ist ersichtlich, dass durch ein Belassen des Ionentauscherharzes in der Salzsole zwar eine niedrige Keimzahl erreichbar ist. Jedoch kann eine ähnlich niedrige Keimzahl, und bei längeren Lagerzeiträumen sogar niedrigere Keimzahl erreicht werden, wenn nur die Oberfläche des Ionentauschers bei der Lagerung mit Salzsole benetzt ist, nicht aber der Ionentauscher von der flüssigen Salzsole umgeben bleibt.

Die **Fig. 6** erläutert beispielhaft einen ersten Ablauf zum Benetzen einer Wasserbehandlungsstruktur mit Salzsole, wie er im Rahmen des erfindungsgemäßen Verfahrens angewandt werden kann.

Eine nur teilweise dargestellte Wasserbehandlungsanlage 1 weist einen Behälter 2 auf, in welchem eine Wasserbehandlungsstruktur 3a angeordnet ist, hier eine Ionentauscher-Struktur mit einer Schüttung aus Ionentauscherharz-Körnern 3. Der Behälter 2 bzw. die Wasserbehandlungsanlage 1 besitzt hier einen oberen Anschluss 4 und einen unteren Anschluss 5.

Im ersten Teilbild A wird ein Schritt a) 120 gezeigt, in welchem der Behälter 2 durch den oberen Anschluss mit einer 60%igen Salzsole 6 (gepunktet dargestellt) befüllt wird. Dadurch werden die Ionentauscherharz-Körner 3 hier bei verschlossenem unteren Anschluss 4 von unten beginnend und schließlich vollständig von flüssiger Salzsole 6 umgeben.

Wenn der Behälter 2 vollständig mit Salzsole 6 aufgefüllt ist, dargestellt im zweiten Teilbild B, erfolgt in einem Schritt b) 130 eine Einwirkung der Salzsole auf die Ionentauscherharz-Körner 3 für eine Einwirkzeit t2. Dabei sind die Anschlüsse 4, 5 typischerweise verschlossen.

Sodann wird die Salzsole 6 in einem Schritt c) 140, dargestellt im dritten Teilbild C, aus dem Behälter 2 entfernt. In der gezeigten Variante wird dabei Druckgas über den oberen Anschluss 4 in den Behälter 2 eingeblasen, und die Salzsole 6 wird durch das eingeströmte Gas 8 über den unteren Anschluss 5 aus dem Behälter 2 herausgedrängt (ausgeblasen). Die Oberfläche der Ionentauscherharz-Körner 3 bleibt dabei jedoch mit Salzsole benetzt, angedeutet durch die gepunktete Darstellung der Ionentauscherharz-Körner 3. Das Druckgas (beispielsweise ein Schutzgas wie Argon, oder auch Luft) bzw. Gas 8 wird hier über eine Druckgasflasche 7 zur Verfügung gestellt; alternativ kann auch ein Kompressor eingesetzt werden, der Druckluft durch Komprimieren der Umgebungsluft zur Verfügung stellt (nicht näher dargestellt). Die ausgeblasene Salzsole 6 kann aufgefangen werden, etwa in einem Bottich, und für die Befüllung eines nächsten Behälters eingesetzt werden, um eine darin enthaltene, nächste Wasserbehandlungsstruktur mit Salzsole zu benetzen.

Nach dem Ablassen der Salzsole wird der Behälter 2 an den Anschlüssen 4, 5 gasdicht verschlossen, so dass die Wasserbehandlungsstruktur 3a problemlos über längere Zeit im Konservierzustand 145 gehalten werden kann. Im Konservierzustand 145 ist die Oberfläche der Ionentauscherharz-Körner 3 mit Salzsole benetzt, aber eine Umgebung der Wasserbehandlungsstruktur 3a im Behälter 2, also der Behälter 2 im Übrigen, im Wesentlichen mit dem Gas 8 befüllt; der Konservierzustand 145 ist im vierten Teilbild D dargestellt.

Die **Fig. 7** erläutert beispielhaft einen zweiten Ablauf zum Benetzen einer Wasserbehandlungsstruktur mit Salzsole, wie er im Rahmen des erfindungsgemäßen Verfahrens angewandt werden kann.

Die Wasserbehandlungsstruktur 3a ist wiederum eine Schüttung von Ionentauscherharz-Körnern 3, die hier in einem Drahtkäfig 12 angeordnet ist.

In einem ersten Schritt a') 121, dargestellt in Teilbild A', wird die Wasserbehandlungsstruktur 3a mit einem Salzsole-Gas-Gemisch 9 besprüht. Dazu wird in einem Sprühkopf 10 eine 60%ige Salzsole 6 mit einem Druckgas vermischt; der Sprühkopf wird typischerweise um die Wasserbehandlungsstruktur 3a herum geführt, um diese von allen Seiten durch den Drahtkäfig 12 hindurch besprühen zu können. Das Druckgas ist bevorzugt Druckluft und wird hier von einer Druckgasflasche 11 zur Verfügung gestellt; alternativ kann auch ein Kompressor Umgebungsluft komprimieren. Das Besprühen mit dem Salzsole-Gas-Gemisch 9 bewirkt eine Benetzung der Oberfläche der Ionentauscherharz-Körner 3 (die bereits benetzten Ionentauscherharz-Körner 3 sind gepunktet dargestellt). Im Rahmen des ersten Schritts a') werden schließlich alle Ionentasucherharz-Körner 3 im Drahtkäfig 12 mit Salzsole 6 benetzt.

Sodann wird in einem zweiten Schritt b') 131 die Wasserbehandlungsstruktur 3a in einen Behälter 2 eingesetzt, dargestellt in Teilbild B'. In der gezeigten Variante weist der Behälter 2 dazu zwei Hälften 2a, 2b auf, die von außen über den Drahtkäfig 12 geschoben werden und in nicht näher dargestellter Weise abdichtend verbunden werden.

Nach dem Einsetzten in den Behälter 2 wird der Behälter 2 an seinen Anschlüssen 4, 5 gasdicht verschlossen, vgl. Teilbild C'. Die Wasserbehandlungsanlage 1, die in Fig. 7 nur teilweise dargestellt ist und zu der der Behälter 2 mit der Wasserbehandlungsstruktur 3a gehört, ist nun im Konservierzustand 145. Die Wasserbehandlungsstruktur 3a bzw. deren Ionentauscherharz-Körner 3 sind vor Austrocknung geschützt, wobei Oberfläche der Ionentauscherharz-Körner 3 lange Zeit mit Salzsole benetzt bleiben kann. Der Behälter 2 ist hier (von der Wasserbehandlungsstruktur 3a abgesehen), bedingt durch den Verfahrensablauf, mit Umgebungsluft als Gas 8 gefüllt.

Die **Fig. 8** illustriert ergänzend die Benetzung der Oberfläche einer Wasserbehandlungsstruktur 3a unter Verwendung eines Salzsole-Gas-Gemischs 9 in einer Untervariante. Der Ablauf entspricht weitgehend Fig. 7, so dass nur die wesentlichen Unterschiede erläutert werden, beschränkt auf das dortige Teilbild A'.

In der Untervariante von Fig. 8 ist die Wasserbehandlungsstruktur 3a als ein näherungsweise zylindermantelförmiger Siebfilter 13 ausgebildet, der mittels des Sprühkopfs 10 mit dem Salzsole-Gas-Gemisch 9 besprüht wird. Die Salzsole 6 ist hier zusätzlich mit einem Desinfektionsmittel 14 versetzt worden. Das Desinfektionsmittel 14, das beispielsweise einen Alkohol (beispielsweise Ethanol oder Isopropanol) enthält, tötet bereits auf der Oberfläche des Siebfilters 13 vorhandene Keime sehr schnell ab, verflüchtigt sich jedoch innerhalb weniger Minuten vom Siebfilter 13, typischerweise bevor das Einsetzten in den Behälter erfolgen kann. Im Gegensatz dazu bleibt die Oberflächenbenetzung mit der Salzsole 6 langfristig erhalten, insbesondere auch bis nach dem Einsetzen des Siebfilters 13 in den Behälter und dessen gasdichtem Verschließen, und verhindert eine spätere Aufkeimung.

### Bezugszeichenliste

- 1: Wasserbehandlungsanlage
- 2: Behälter
- 2a, 2b: Hälften des Behälters
- 3: Ionentauscherharz-Körner
- 3a: Wasserbehandlungsstruktur
- 4: (oberer) Anschluss
- 5: (unterer) Anschluss
- 6: Salzsole
- 7: Druckgasflasche
- 8: Gas
- 9: Salzsole-Gas-Gemisch
- 10: Sprühkopf
- 11: Druckgasbehälter
- 12: Drahtkäfig
- 13: Siebfilter
- 14: Desinfektionsmittel
- 100: Start (Grundfall)
- 101: Start (Unterfall)
- 110: Zusammenbau Wasserbehandlungsanlage
- 120: Befüllung mit Salzsole
- 121: Besprühen der Wasserbehandlungsstruktur mit Salzsole-Gas-Gemisch
- 130: Abwarten Einwirkzeit
- 131: Einsetzen der Wasserbehandlungsstruktur in den Behälter
- 140: Entfernen Salzsole
- 145: Konservierzustand
- 150: Lagerung
- 151: Ausbau
- 160: Transport
- 161: Reparatur/Wartung/Transport
- 170: Einbau in Hausinstallation
- 180: Spülung
- 190: Inbetriebnahme
- t1: Konservierzeit
- t2: Einwirkzeit

## Patentansprüche

1. Verfahren zur Konservierung einer Wasserbehandlungsanlage (1) mit einer Salzsole (6),
wobei die Wasserbehandlungsanlage (1) einen Behälter (2) umfasst, in welchem wenigstens eine Wasserbehandlungsstruktur (3a) angeordnet ist, und wobei die Wasserbehandlungsanlage (1) für eine Konservierzeit t1 von wenigstens 8 Stunden in einem Konservierzustand (145) verbleibt, insbesondere wobei der Konservierzustand (145) dadurch beendet wird, dass der Behälter (2) vor einer Inbetriebnahme (190) der Wasserbehandlungsanlage (1) mit Wasser gespült wird (180),
**dadurch gekennzeichnet,**
**dass** im Konservierzustand (145) eine Oberfläche der wenigstens einen Wasserbehandlungsstruktur (3a) im Behälter (2) mit der Salzsole (6) benetzt gehalten wird, und eine Umgebung der wenigstens einen Wasserbehandlungsstruktur (3a) im Behälter (2) mit einem Gas (8) befüllt gehalten wird.

2. Verfahren nach Anspruch 1, **dadurch gekennzeichnet, dass** das Gas (8) als Luft gewählt ist.

3. Verfahren nach Anspruch 1, **dadurch gekennzeichnet, dass** das Gas (8) als ein Inertgas, insbesondere Stickstoff oder Argon, gewählt ist.

4. Verfahren nach einem der vorhergehenden Ansprüche, **dadurch gekennzeichnet, dass** der Behälter (2) im Konservierzustand (145) gasdicht verschlossen gehalten wird.

5. Verfahren nach einem der vorhergehenden Ansprüche, **dadurch gekennzeichnet, dass** die wenigstens eine Wasserbehandlungsstruktur (3a) eine Ionentauscher-Struktur umfasst, insbesondere umfassend eine Schüttung von Ionentauscherharz-Körnern (3).

6. Verfahren nach einem der vorhergehenden Ansprüche, **dadurch gekennzeichnet, dass** die wenigstens eine Wasserbehandlungsstruktur (3a) einen Filter, insbesondere einen Siebfilter (13) oder einen Aktivkohlefilter, und/oder eine semipermeable Membran umfasst.

7. Verfahren nach einem der Ansprüche 1 bis 6, **dadurch gekennzeichnet, dass** das Verfahren vor Beginn der Konservierzeit t1 folgende Schritte umfasst:
a) Befüllen des Behälters (2), in welchem die wenigstens eine Wasserbehandlungsstruktur (3a) angeordnet ist, mit der Salzsole (6) (120);
b) Einwirken der Salzsole (6) auf die Wasserbehandlungsstruktur (3a) während einer Einwirkzeit t2, wobei t2<t1 (130);
c) Entfernen der Salzsole (6) aus dem Behälter (2) und Befüllen des Behälters mit dem Gas (8) (140).

8. Verfahren nach Anspruch 7, **dadurch gekennzeichnet, dass** in Schritt c) (140) der Behälter (2) mit Druckgas, insbesondere Druckluft, ausgeblasen wird.

9. Verfahren nach einem der Ansprüche 7 oder 8, **dadurch gekennzeichnet, dass** in Schritt c) (140) die Salzsole (6) über einen Anschluss (5) entfernt wird, der unterhalb des Behälters (2) an der Wasserbehandlungsanlage (1) angeordnet ist.

10. Verfahren nach einem der Ansprüche 1 bis 6, **dadurch gekennzeichnet,**
**dass** das Verfahren vor Beginn der Konservierzeit t1 folgenden Schritt umfasst:
a') die wenigstens eine Wasserbehandlungsstruktur (3a) wird einem Salzsole-Gas-Gemisch (9) ausgesetzt, insbesondere mit einem Salzsole-Gas-Gemisch (9) besprüht (121), so dass die Oberfläche der Wasserbehandlungsstruktur (3a) mit der Salzsole (6) benetzt wird.

11. Verfahren nach Anspruch 10, **dadurch gekennzeichnet,**
**dass** Schritt a') (121) erfolgt, bevor die wenigstens eine Wasserbehandlungsstruktur (3a) in den Behälter (2) eingesetzt ist,
und **dass** das Verfahren vor Beginn der Konservierzeit t1 weiterhin folgenden Schritt umfasst:
b') die an ihrer Oberfläche mit Salzsole (6) benetzte, wenigstens eine Wasserbehandlungsstruktur (3a) wird in den Behälter (2) eingesetzt (131).

12. Verfahren nach einem der Ansprüche 1 bis 11, **dadurch gekennzeichnet,**
**dass** die Konservierzeit t1 während oder nach dem Zusammenbau (110) der Wasserbehandlungsanlage (1) an einem Zusammenbauort, aber vor einem Transport (160) der Wasserbehandlungsanlage (1) vom Zusammenbauort zu einem Anwendungsort, insbesondere dem Ort einer Hausinstallation, beginnt.

13. Verfahren nach einem der Ansprüche 1 bis 11, **dadurch gekennzeichnet,**
**dass** die Konservierzeit t1 vor dem Ausbau (151) der Wasserbehandlungsanlage (1) an einem Anwendungsort, insbesondere dem Ort einer Hausinstallation, beginnt.

14. Verfahren nach einem der vorhergehenden Ansprüche, **dadurch gekennzeichnet, dass** der Salzsole (6) ein Desinfektionsmittel (14) zugegeben wird oder ein Desinfektionsmittel (14) elektrolytisch in der Salzsole (6) erzeugt wird.

## Claims

1. Method of preserving a water treatment system (1) with a brine (6),
wherein the water treatment system (1) comprises a container (2) in which at least one water treatment structure (3a) is arranged, and wherein the water treatment system (1) remains in a preservation state (145) for a preservation time t1 of at least 8 hours, in particular wherein the preservation state (145) is terminated by rinsing (180) the container (2) with water prior to a start-up (190) of the water treatment system (1),
**characterized in that**
in the preservation state (145) a surface of the at least one water treatment structure (3a) in the container (2) is kept wetted with the brine (6), and a surrounding area of the at least one water treatment structure (3a) in the container (2) is kept filled with a gas (8).

2. Method according to claim 1, **characterized in that** the gas (8) is selected to be air.

3. Method according to claim 1, **characterized in that** the gas (8) is selected to be an inert gas, in particular nitrogen or argon.

4. Method according to one of the preceding claims, **characterized in that** the container (2) is kept closed in a gas-tight manner in the preservation state (145).

5. Method according to one of the preceding claims, **characterized in that** the at least one water treatment structure (3a) comprises an ion-exchange structure, in particular comprising a bed of ion-exchange resin grains (3).

6. Method according to one of the preceding claims, **characterized in that** the at least one water treatment structure (3a) comprises a filter, in particular a screen filter (13) or an activated carbon filter, and/or a semi-permeable membrane.

7. Method according to one of claims 1 to 6, **characterized in that** the method comprises, before the start of the preservation time t1, the following steps:
(a) filling the container (2) in which the at least one water treatment structure (3a) is arranged with the brine (6) (120);
b) exposing the water treatment structure (3a) to the brine (6) for an exposure time t2, where t2<t1 (130);
c) removing the brine (6) from the container (2) and filling the container with the gas (8) (140).

8. Method according to claim 7, **characterized in that** in step c) (140) the container (2) is blown out with compressed gas, in particular compressed air.

9. Method according to one of claims 7 or 8, **characterized in that** in step c) (140) the brine (6) is removed via a connection (5) which is arranged below the container (2) on the water treatment system (1).

10. Method according to one of claims 1 to 6, **characterized in that** the method comprises the following step before the start of the preservation time t1:
a') the at least one water treatment structure (3a) is exposed to a brine-gas mixture (9), in particular sprayed (121) with a brine-gas mixture (9), so that the surface of the water treatment structure (3a) is wetted with the brine (6).

11. Method according to claim 10, **characterized in that**
step a') (121) is carried out before the at least one water treatment structure (3a) is inserted into the container (2),
and **in that** the method further comprises the following step before the start of the preservation time t1:
b') the at least one water treatment structure (3a) wetted at its surface with brine (6) is inserted into the container (2) (131).

12. Method according to one of claims 1 to 11, **characterized in that** the preservation time t1 starts during or after the assembly (110) of the water treatment system (1) at an assembly site, but before transport (160) of the water treatment system (1) from the assembly site to a place of use, in particular the location of a domestic installation.

13. Method according to one of claims 1 to 11, **characterized in that** the preservation time t1 starts before the removal (151) of the water treatment system (1) at a place of use, in particular the location of a domestic installation.

14. Method according to one of the preceding claims, **characterized in that** a disinfectant (14) is added to the brine (6) or a disinfectant (14) is generated electrolytically in the brine (6).

## Revendications

1. Procédé de conservation d'une installation (1) de traitement des eaux, à l'aide d'une saumure (6),
l'installation (1) de traitement des eaux incluant un récipient (2) dans lequel se trouve au moins une structure (3a) de traitement des eaux,
et ladite installation (1) de traitement des eaux demeurant dans un état de conservation (145) pendant un temps de conservation t1 d'au moins 8 heures,
sachant notamment qu'il est mis un terme audit état de conservation (145) par rinçage à l'eau (180) du récipient (2), préalablement à une mise en service (190) de ladite installation (1) de traitement des eaux,
**caractérisé par le fait**
**qu'**une surface de la structure (3a) de traitement des eaux à présence minimale est maintenue, à l'état de conservation (145), imprégnée par la saumure (6) dans le récipient (2), et un espace environnant ladite structure (3a) de traitement des eaux à présence minimale, dans ledit récipient (2), est maintenu empli d'un gaz (8).

2. Procédé selon la revendication 1, **caractérisé par le fait que** de l'air est choisi en tant que gaz (8).

3. Procédé selon la revendication 1, **caractérisé par le fait qu'**un gaz inerte, en particulier de l'azote ou de l'argon, est choisi en tant que gaz (8).

4. Procédé selon l'une des revendications précédentes, **caractérisé par le fait que** le récipient (2) est maintenu obturé avec étanchéité aux gaz à l'état de conservation (145).

5. Procédé selon l'une des revendications précédentes, **caractérisé par le fait que** la structure (3a) de traitement des eaux à présence minimale comprend une structure d'échange d'ions incluant, en particulier, un lit de grains (3) de résine échangeuse d'ions.

6. Procédé selon l'une des revendications précédentes, **caractérisé par le fait que** la structure (3a) de traitement des eaux à présence minimale comprend filtre, en particulier un filtre (13) à tamis ou un filtre à charbon actif et/ou une membrane semi-perméable.

7. Procédé selon l'une des revendications 1 à 6, **caractérisé par le fait que** ledit procédé inclut, avant le début du temps de conservation t1, les étapes suivantes consistant à :
a) emplir (120), à l'aide de la saumure (6), le récipient (2) dans lequel se trouve la structure (3a) de traitement des eaux à présence minimale ;
b) faire agir (130) la saumure (6) sur ladite structure (3a) de traitement des eaux pendant un temps d'action t2, sachant que t2 < t1 ;
c) retirer (140) la saumure (6) du récipient (2), et emplir ledit récipient à l'aide du gaz (8).

8. Procédé selon la revendication 7, **caractérisé par le fait que**, durant l'étape c) (140), le récipient (2) est purgé pneumatiquement à l'aide d'un gaz comprimé, en particulier de l'air comprimé.

9. Procédé selon l'une des revendications 7 ou 8, **caractérisé par le fait que**, durant l'étape c) (140), la saumure (6) est retirée par l'intermédiaire d'un raccord (5) disposé au-dessous du récipient (2) sur l'installation (1) de traitement des eaux.

10. Procédé selon l'une des revendications 1 à 6, **caractérisé par le fait que** ledit procédé inclut, avant le début du temps de conservation t1, l'étape suivante consistant à :
a') exposer la structure (3a) de traitement des eaux, à présence minimale, à un mélange (9) de saumure et de gaz, notamment à l'asperger (121) d'un mélange (9) de saumure et de gaz, de façon telle que la surface de ladite structure (3a) de traitement des eaux soit imprégnée par la saumure (6).

11. Procédé selon la revendication 10, **caractérisé par le fait**
**que** l'étape a') (121) a lieu avant que la structure (3a) de traitement des eaux, à présence minimale, soit introduite dans le récipient (2) ;
et par le fait que ledit procédé inclut par ailleurs, avant le début du temps de conservation t1, l'étape suivante consistant à :
b') introduire (131), dans ledit récipient (2), ladite structure (3a) de traitement des eaux à présence minimale imprégnée, à sa surface, par la saumure (6).

12. Procédé selon l'une des revendications 1 à 11, **caractérisé par le fait que** le temps de conservation t1 débute pendant ou après l'assemblage (110) de l'installation (1) de traitement des eaux sur un site d'assemblage, mais préalablement à un transport (160) de ladite installation (1) de traitement des eaux dudit site d'assemblage à un site d'utilisation, en particulier le site d'une installation domestique.

13. Procédé selon l'une des revendications 1 à 11, **caractérisé par le fait que** le temps de conservation t1 débute préalablement au démantèlement (151) de l'installation (1) de traitement des eaux sur un site d'utilisation, en particulier le site d'une installation domestique.

14. Procédé selon l'une des revendications précédentes, **caractérisé par le fait qu'**un agent désinfectant (14) est ajouté à la saumure (6), ou bien qu'un agent désinfectant (14) est produit par électrolyse dans ladite saumure (6).
